# EUROPÄISCHE PATENTSCHRIFT

(11) **EP 2 791 991 B1**
(45) Veröffentlichungstag und Bekanntmachung des Hinweises auf die Patenterteilung: **09.01.2019**
(21) Anmeldenummer: 12783997.5
(22) Anmeldetag: 08.11.2012
(51) Int. Cl.: H01M 2/04, H01M 2/34, H01M 10/0525, H01M 10/42

(54) **BATTERIEZELLE, BATTERIE, KRAFTFAHRZEUG**
BATTERY CELL, BATTERY, MOTOR VEHICLE
ÉLÉMENT DE BATTERIE, BATTERIE, VÉHICULE À MOTEUR

(30) Priorität: 15.12.2011 DE 102011088731
(43) Veröffentlichungstag der Anmeldung: 22.10.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: EBERLE, Felix, 70469 Ulm (DE); REITZLE, Alexander, 89231 Neu-Ilm (DE); KRIEG, Berengar, 70839 Gerlingen (DE)
(74) Vertreter: Bee, Joachim
(86) Internationale Anmeldenummer: PCT/EP2012/072126
(87) Internationale Veröffentlichungsnummer: WO 2013/087304

(56) Entgegenhaltungen:
- EP-A1- 2 226 868
- EP-A1- 2 259 364
- EP-A1- 2 299 512
- EP-A1- 2 348 559

## Beschreibung

Die vorliegende Erfindung betrifft eine Batteriezelle mit einer Sicherheitsmembran, welche dazu ausgebildet ist, sich bei einem Druckanstieg innerhalb der Batteriezelle nach außen zu wölben und dadurch eine elektrisch leitfähige Verbindung der beiden Pole herzustellen.

Ferner betrifft die Erfindung eine Batterie, welche eine Mehrzahl der erfindungsgemäßen Batteriezellen umfasst, sowie ein Kraftfahrzeug mit der Batterie.

### Stand der Technik

Es zeichnet sich ab, dass in Zukunft sowohl bei stationären Anwendungen, wie Windkraftanlagen, in Kraftfahrzeugen, die als Hybrid- oder Elektrokraftfahrzeuge ausgelegt sind, als auch bei Elektronikgeräten, wie Laptops oder Mobiltelefonen, neue Batteriesysteme zum Einsatz kommen werden, an die sehr hohe Anforderungen bezüglich Zuverlässigkeit, Sicherheit, Leistungsfähigkeit und Lebensdauer gestellt werden.

In Fahrzeugen mit zumindest teilweisem elektrischen Antrieb kommen elektrische Energiespeicher zum Einsatz, um die elektrische Energie für den Elektromotor, welcher den Antrieb unterstützt bzw. als Antrieb dient, zu speichern. In den Fahrzeugen der neuesten Generation finden hierbei sogenannte Lithium-Ionen-Batterien Verwendung. Diese zeichnen sich unter anderem durch hohe Energiedichten und eine äußerst geringe Selbstentladung aus. Lithium-Ionen-Zellen besitzen mindestens eine positive und eine negative Elektrode (Kathode bzw. Anode), die Lithium-Ionen (Li+) reversibel ein-(Interkalation) oder wieder auslagern (Deinterkalation) können.

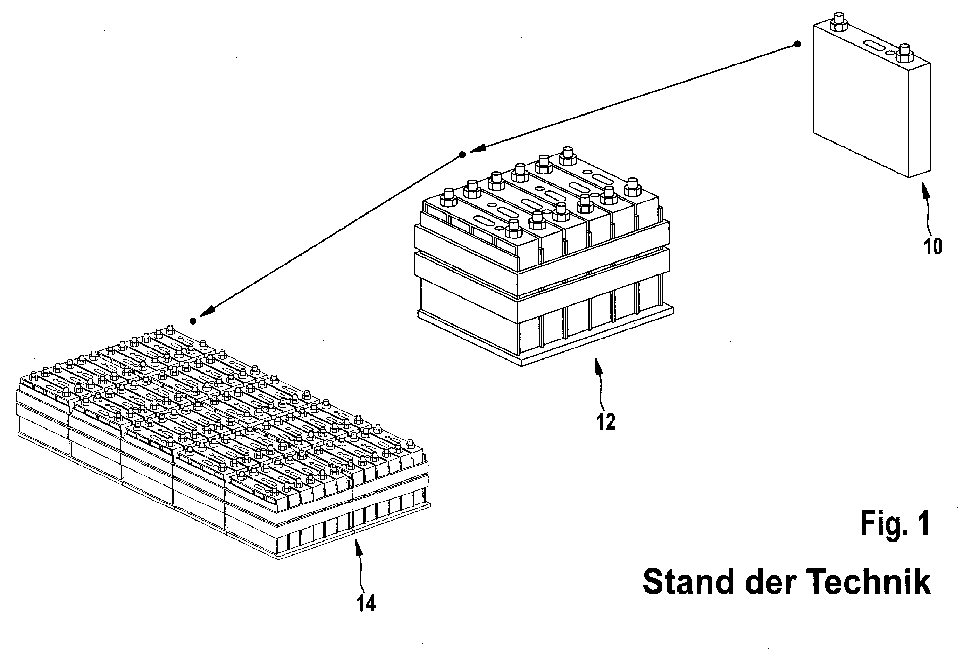

Figur 1 zeigt, wie einzelne Batteriezellen 10 zu Batteriemodulen 12 und dann zu Batterien 14 zusammengefasst werden können. Dies erfolgt durch eine nicht dargestellte Parallel- oder Reihenschaltung der Pole der Batteriezellen 10. Dabei besteht per Definition ein Batteriemodul 12 bzw. eine Batterie 14 aus mindestens zwei Batteriezellen 10, wobei die Begriffe Batterie 14 und Batteriemodul 12 oft synonym verwendet werden. Die elektrische Spannung einer Batterie 14 beträgt beispielsweise zwischen 12 und 750 Volt Gleichspannung.

An Batteriezellen, z. B. Lithium-Ionen-Batteriezellen, werden zur Zulassung zum Transport und zum Einsatz in Kraftfahrzeugen diverse Tests durchgeführt. Unter anderem auch so genannte Missbrauchstests (Abuse Tests), um das Verhalten der Batteriezellen unter Extremsituationen, wie beispielsweise einem Verkehrsunfall, beurteilen zu können.

Um die Folgen einiger Missbrauchstests abzuschwächen, werden in den Batteriezellen Mechanismen verbaut, die einen Stromfluss in die Batteriezelle unterbrechen, wenn der zellinterne Druck aufgrund des Missbrauchs der Batteriezelle wächst. Bekannt sind beispielsweise Stromunterbrechungseinrichtungen (current interruptive devices - CID) oder Überladeschutzeinrichtungen (overcharge safety devices - OSD).

Die US 6 497 978 B1 zeigt eine mögliche Realisierung einer mechanischen Stromunterbrechung. Zwischen dem Pluspol einer zylindrischen Batteriezelle und der mit dem Pluspol elektrisch leitend verbundenen positiven Elektrode ist ein Sicherungsmechanismus verbaut. Steigt der Druck innerhalb der Batteriezelle, wird zunächst ein Deckel innerhalb der Batteriezelle verformt, wodurch die elektrisch leitfähige Verbindung zwischen dem Pluspol und der positiven Elektrode unterbrochen wird. Bei weiter zunehmendem Druck können Batteriegase über eine geplatzte Folie ins Freie entweichen.

Die JP 5062664 A zeigt eine andere Variante einer mechanisch aktivierten Sicherungseinrichtung. Die ebenfalls zylindrische Batteriezelle verfügt am Zelldeckel ihres Pluspols über eine elektrisch leitende Membran. Diese kann sich bei einem Druckanstieg innerhalb der Batteriezelle ausdehnen und kontaktiert dadurch eine am Batteriezellengehäuse befestigte Auskragung, welche wie auch das Batteriezellengehäuse auf dem Potential des Minuspols liegt. Durch den Kontakt der Membran mit der Auskragung wird die Batteriezelle kurzgeschlossen, wodurch beispielsweise eine weitere Überladung gestoppt wird.

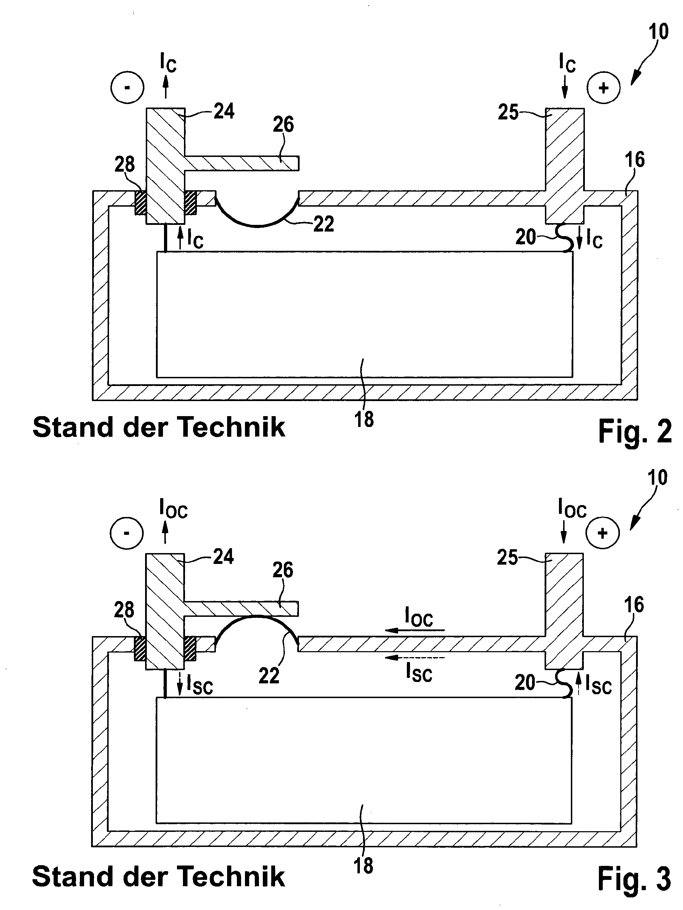

In der EP 2 348 559 A1 ist ein Batteriezelle mit einer Überladeschutzeinrichtung offenbart die aus einer Membran, einer Auskragung und einem Leiter gebildet wird. Figur 2 zeigt einen ähnlichen Mechanismus einer Überladeschutzeinrichtung am Beispiel einer prismatischen Batteriezelle 10. Diese umfasst eine im elektrisch leitfähigen Batteriezellengehäuse 16 integrierte, ebenfalls elektrisch leitfähige Membran 22, welche im fehlerfreien Zustand nach innen gewölbt ist. Die Batteriezelle 10 umfasst des Weiteren einen vom Batteriezellengehäuse 16 elektrisch isolierten Pol 24 (in diesem Fall der Minuspol) und einen mit dem Batteriezellengehäuse 16 elektrisch leitend verbundenen Pol 25 (in diesem Fall der Pluspol). Die elektrische Isolation des isolierten Pols 24 vom Batteriezellengehäuse 16 wird über einen Isolator 28 gewährleistet, wohingegen der verbundene Pol 25 beispielsweise ein Teil des Batteriezellengehäuses 16 oder in dieses eingefügt sein kann. Wird die Batteriezelle 10 geladen, so fließt ein Ladestrom I_{C} über den Pluspol in den chemisch aktiven Teil 18 der Batteriezelle 10.
Steigt nun der Druck innerhalb der Batteriezelle 10, beispielsweise in Folge einer Überladung der Batteriezelle 10, wölbt sich die Membran 22 wie in Figur 3 dargestellt nach außen und kommt in elektrisch leitenden Kontakt zu einer Auskragung 26 am isolierten Pol 24 der Batteriezelle 10. Dadurch werden die beiden Pole 24, 25 elektrisch leitend miteinander verbunden. Der Widerstand dieser elektrisch leitfähigen Verbindung ist klein genug dimensioniert, dass ein Überladestrom I_{OC} nicht mehr durch den chemisch aktiven Teil 18, sondern durch das Batteriezellengehäuse 16, die Membran 22 und die Auskragung 26 fließt. Gleichzeitig kommt es jedoch zu einem Kurzschluss der Batteriezelle 10 über die beiden Pole 24, 25. Ein Kurzschlussstrom I_{SC} fließt über die Membran 22 und das Zellgehäuse 16 und könnte dabei die Membran 22 zerstören. Um dies zu verhindern, ist zwischen dem chemisch aktiven Teil 18 und einem der Pole 24, 25 - in diesem Fall dem Pluspol - eine Sicherung 20 verbaut, die den Kurzschlussstrom I_{SC} unterbricht, bevor dieser die Membran 22 zerstören kann.

### Offenbarung der Erfindung

Erfindungsgemäß wird eine Batteriezelle mit einer Membran zur Verfügung gestellt. Die Membran ist dazu ausgebildet, sich bei einem Druckanstieg innerhalb der Batteriezelle nach außen (in die der Batteriezelle abgewandten Richtung) zu wölben und dadurch eine elektrisch leitfähige Verbindung der beiden Pole herzustellen. Kennzeichnend ist ein Leiter an der Außenseite (auf der der Batteriezelle abgewandten Seite) der Membran angeordnet und derart mit der Batteriezelle verbunden, dass durch die sich nach außen wölbende Membran der Leiter von der Membran einseitig angehoben wird, so dass die Pole über den Leiter miteinander elektrisch leitfähig verbunden werden.

Normalerweise ist einer der Pole vom Batteriezellengehäuse elektrisch isoliert (isolierter Pol), während der andere Pol elektrisch leitend mit dem Batteriezellengehäuse verbunden ist (verbundener Pol). Der isolierte Pol ist beispielsweise der Minuspol, wodurch der mit dem Batteriezellengehäuse verbundene Pol der Pluspol ist. Es sind jedoch auch Batteriezellen bekannt, bei denen die Polarität umgekehrt ist.

Eine Kontaktstelle für den von der Membran angehobenen Leiter kann beispielsweise eine vom isolierten Pol abstehende Auskragung darstellen. Diese Auskragung bildet zugleich auch den Endanschlag für den angehobenen Leiter. In der Praxis ist das Zusammenspiel aus Membran und Leiter so dimensioniert, dass die elektrisch leitfähige Verbindung der beiden Pole ab einem gewissen Druck innerhalb der Zelle erfolgt. Dieser Druck wird beispielsweise infolge einer Überladung der Batteriezelle, bei 60Ah-Batteriezellen typischerweise bei einem Ladestand von 150 % erreicht.

Der Erfindung liegt die Erkenntnis zu Grunde, die einzelnen Funktionen der Membran voneinander zu entkoppeln. Bei bisherigen Batteriezellen ist sie für das Erkennen eines hohen Batteriezelleninnendrucks, das Herstellen einer leitenden Verbindung zwischen den beiden Polen und den Stromtransport des Lade- und Kurzschlussstromes zuständig. Durch Trennung der Funktionen und Übernahme der Funktion der Stromleitung durch den Leiter wird die Möglichkeit eröffnet, den Kurzschlussstrom der Batteriezelle anders als durch eine Sicherung innerhalb der Batteriezelle zu kontrollieren. Dadurch wird es möglich, eine Überladeschutzeinrichtung ohne Sicherung zu realisieren. Folglich entfällt das Risiko, einen eventuellen vorhandenen, hohen Kurzschlussstrom mehrerer in Reihe geschalteter Batteriezellen innerhalb einer Batteriezelle unterbrechen zu müssen, was gegebenenfalls nicht ohne Lichtbogen möglich ist.
Diese Entkoppelung der Funktionen ist insbesondere dann gegeben, wenn zwischen der Sicherheitsmembran und dem Leiter ein elektrischer Isolator angeordnet ist, so dass ein möglicher Strom zwischen den beiden Batteriepolen den Leiter durchfließen muss. Dieser Strom ist die Gesamtheit jenes Stromes, welcher nach Herstellung der elektrisch leitfähigen Verbindung der beiden Pole zwischen diesen beiden Polen außerhalb des chemisch aktiven Teils der Batteriezelle fließt. Der Isolator kann beispielsweise aus Kunststoff bestehen, oder als Beschichtung der Membran und/oder des Leiters ausgeführt sein.
Beispielsweise bei einem Einsatz der erfindungsgemäßen Batteriezelle in einem Kraftfahrzeug können sich Stöße oder Vibrationen auf die Batteriezelle übertragen. Dies kann in Folge zu ungewollten Bewegungen des Leiters führen, wodurch eine unbeabsichtigte Kontaktierung des Leiters mit der Auskragung erfolgen kann. Um dies zu verhindern, kann eine Vibrationssperre ein mögliches Schwingen des Leiters verhindern. Diese hindert den Leiter form- und/oder reibschlüssig daran zu schwingen, kann bei einer Ausdehnung der Membran nach außen aber leicht genug überwunden werden.
Ferner bevorzugt verfügt die Membran über eine solche Steifigkeit, dass die Membran im Normalzustand in Richtung Innenraum der Batteriezelle gewölbt ist und bei ausreichendem Innendruck der Batteriezelle sprungartig nach außen hin umklappt. Diese Eigenschaft ist beispielsweise beim Überwinden der Vibrationssperre dienlich, da diese Charakteristik der umklappenden Membran das Überwinden der Vibrationssperre unterstützt.
Bevorzugt ist der Leiter ein Blechstreifen. Dies stellt eine einfache und zugleich kostengünstige Realisierung des Leiters dar.
Des Weiteren bevorzugt ist der Leiter an einem Ende mit der Batteriezelle, insbesondere bevorzugt mit dem Batteriezellengehäuse verschweißt, um einen guten und dauerhaften elektrischen Kontakt mit dem Zellgehäuse darzustellen. Somit ist der Leiter zum Kontaktieren der Auskragung biegbar auszulegen. Je weiter der Befestigungspunkt des Leiters von der Membran entfernt liegt, umso größer ist der Hebel, um durch die Membran angehoben zu werden.

Ferner bevorzugt ist die Batteriezelle eine Lithium-Ionen-Sekundärzelle. Lithium-Ionen-Sekundärzellen zeichnen sich durch eine hohe Energie- und Leistungsdichte aus, was besonders im Bereich der Elektromobilität zu weiteren Vorteilen führt.

Des Weiteren wird eine Batterie umfassend eine Mehrzahl der erfindungsgemäßen Batteriezellen zur Verfügung gestellt.

Ferner wird ein Kraftfahrzeug oder Kraftfahrzeugeinrichtung umfassend die erfindungsgemäße Batterie zur Verfügung gestellt, wobei das Batteriemodul in der Regel zur Speisung eines elektrischen Antriebssystems des Fahrzeuges vorgesehen ist. Die Kraftfahrzeugeinrichtung kann ein batteriebetriebenes, beispielsweise Multimedia-Gerät sein.

Vorteilhafte Weiterbildungen der Erfindung sind in den Unteransprüchen angegeben oder der Beschreibung zu entnehmen.

### Zeichnungen

Ausführungsbeispiele der Erfindung werden anhand der Zeichnungen und der nachfolgenden Beschreibung näher erläutert. Es zeigen:
Figur 1 eine Batteriezelle, ein Batteriemodul und eine Batterie (Stand der Technik),
Figur 2 eine Batteriezelle mit einer Überladeschutzeinrichtung mit voneinander getrennten Polen (Stand der Technik),
Figur 3 eine Batteriezelle mit einer Überladeschutzeinrichtung mit miteinander verbundenen Polen (Stand der Technik),
Figur 4 eine erfindungsgemäße Batteriezelle mit einer Überladeschutzeinrichtung mit voneinander getrennten Polen,
Figur 5 eine erfindungsgemäße Batteriezelle mit einer Überladeschutzeinrichtung mit miteinander verbundenen Polen,
Figur 6 eine mögliche Form des Leiters, und
Figur 7 eine weitere mögliche Form des Leiters.

Auf die Figuren 1, 2 und 3 wurde bereits zur Erläuterung des Standes der Technik eingegangen.

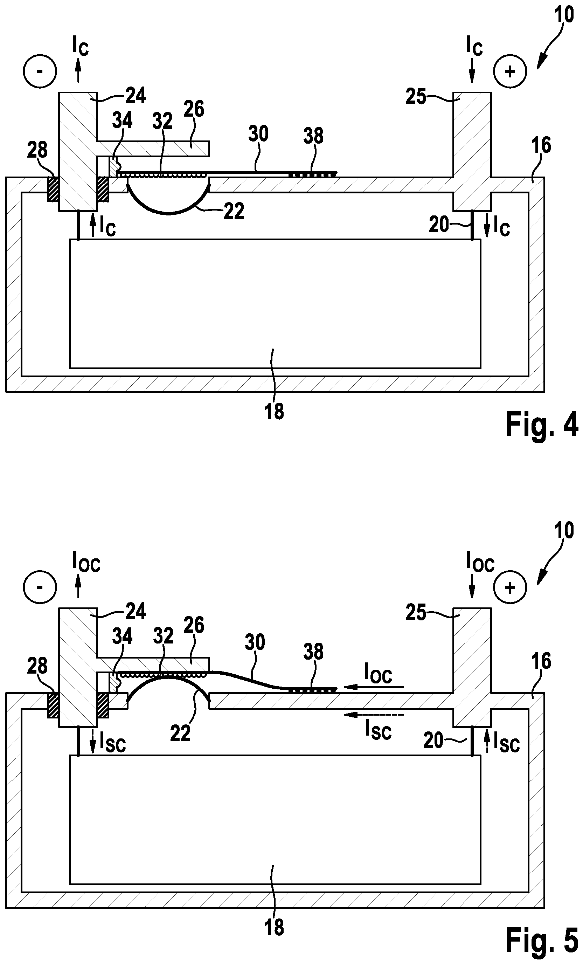

Figur 4 zeigt einen vereinfachten Querschnitt durch eine erfindungsgemäße Batteriezelle 10. Wie bereits aus dem Stand der Technik gemäß den Figuren 2 und 3 bekannt, umfasst die Batteriezelle 10 einen vom Batteriezellengehäuse 16 elektrisch isolierten Pol 24 (z. B. der Minuspol) und einen mit dem Batteriezellengehäuse 16 verbundenem Pol 25 (z. B. der Pluspol). Die elektrische Isolation des isolierten Pols 24 vom Batteriezellengehäuse 16 kann wie dargestellt über einen Isolator 28 gewährleistet sein, wohingegen der mit dem Batteriezellengehäuse 16 verbundene Pol 25 beispielsweise ein Teil des Batteriezellengehäuses 16 oder in dieses eingefügt sein kann. Die Pole 24, 25 sind mit dem chemisch aktiven Teil 18 der Batteriezelle 10 elektrisch leitend verbunden. Auf der Außenseite der Membran 22 ist über dieser ein Leiter 30 angeordnet, welcher an einer Seite in einer Verbindungsstelle 38 (z. B. eine Schweißstelle) mit dem Batteriezellengehäuse 16 elektrisch leitend verbunden ist. Der isolierte Pol 24 verfügt über eine Auskragung, welche als Endanschlag für den Leiter 30 ausgebildet ist. Zwischen Leiter 30 und Membran 22, beispielsweise am Leiter 30, kann ein Isolator 32 angeordnet sein.

Aufgrund von Vibrationen der Batteriezelle 10, beispielsweise beim Betrieb in einem Fahrzeug, kann eine Vibrationssperre 34 erforderlich sein. Diese verhindert Vibrationen des Leiters 30, und somit einen ungewollten Kontakt des Leiters 30 mit der Auskragung 26. Die Vibrationssperre 34 kann beispielsweise derart geformt und angeordnet sein, dass eine Bewegung des Leiters 30 formschlüssig unterbunden wird. Gleichzeitig muss gewährleistet sein, dass die Membran 22 dazu in der Lage ist, beim vorgesehenen Druck innerhalb der Batteriezelle 10, den Leiter 30 anzuheben, und z. B. durch elastische Deformation des Leiters 30 oder der Vibrationssperre 34 einen Kontakt des Leiters 30 mit der Auskragung 26 herzustellen.

Wird die Batteriezelle 10 geladen, so fließt ein Ladestrom I_{C} über den Pluspol und in den chemisch aktiven Teil 18 der Batteriezelle 10. Die beiden Pole 24, 25 sind wie beschrieben mit dem chemisch aktiven Teil 18 elektrisch leitend verbunden, wobei im Gegensatz zum Stand der Technik auf eine Sicherung 20 im Inneren der Batteriezelle 10 verzichtet werden kann.

Erfolgt nun ein Missbrauch der Zelle, bei dem der Druck innerhalb der Batteriezelle 10 ansteigt, z. B. in Folge einer Überladung, so wölbt sich die Membran 22 nach außen. Besitzt die Membran 22 eine ausreichende Steifigkeit und ist im Normalzustand gemäß Figur 4 nach innen gewölbt, so klappt diese bei ausreichendem Druck schlagartig um. Durch das Nach-außen-Wölben der Membran 22 wird der Leiter 30 einseitig angehoben, z. B. gebogen und gegen die Auskragung 26 gedrückt. Die durch die Membran 22 ausgeübte Kraft ist dabei groß genug, um eine vorteilhaft vorhandene Vibrationssperre 34 zu überwinden. Durch den Kontakt des Leiters 30 mit der Auskragung 26 werden die beiden Pole 24, 25 elektrisch leitfähig miteinander verbunden.

Der elektrische Widerstand der elektrisch leitfähigen Verbindung der beiden Pole 24, 25 sollte klein genug dimensioniert sein, so dass wie dargestellt der gesamte Überladestrom I_{OC} über diese elektrisch leitfähige Verbindung fließt und somit nicht mehr in den chemisch aktiven Teil 18 gelangt. Gleichzeitig sollte der Widerstand jedoch auch groß genug dimensioniert sein, so dass nur ein kontrollierter Kurzschlussstrom I_{SC} fließt, damit sich die Batteriezelle 10 durch diesen nicht kritisch erwärmen kann. Der notwendige Widerstand, der diese beiden Kriterien erfüllt, kann experimentell ermittelt werden.

Ist kein Isolator 32 vorhanden, und ist der elektrische Widerstand der Reihenschaltung Auskragung 26 - Leiter 30 - Batteriezellengehäuse 16 geringer als der elektrische Widerstand der Reihenschaltung Auskragung 26 - Leiter 30 - Membran 22 - Batteriezellengehäuse 16, so fließt bereits der Großteil des Stroms I_{OC}+I_{SC} über den Leiter 30. Dadurch ist im Vergleich zum Stand der Technik eine Beschädigung der Membran 22 bereits unwahrscheinlicher, wodurch die Sicherung 20 entfallen kann. Soll jedoch der gesamte Strom über den Leiter 30 fließen, so kann zwischen der Membran 22 und dem Leiter 30 der bereits erwähnte Isolator 32 angeordnet sein. Dies ermöglicht es, den Widerstand der elektrischen Verbindung zwischen den beiden Polen 24, 25 gezielt über den Leiter 30 einzustellen.

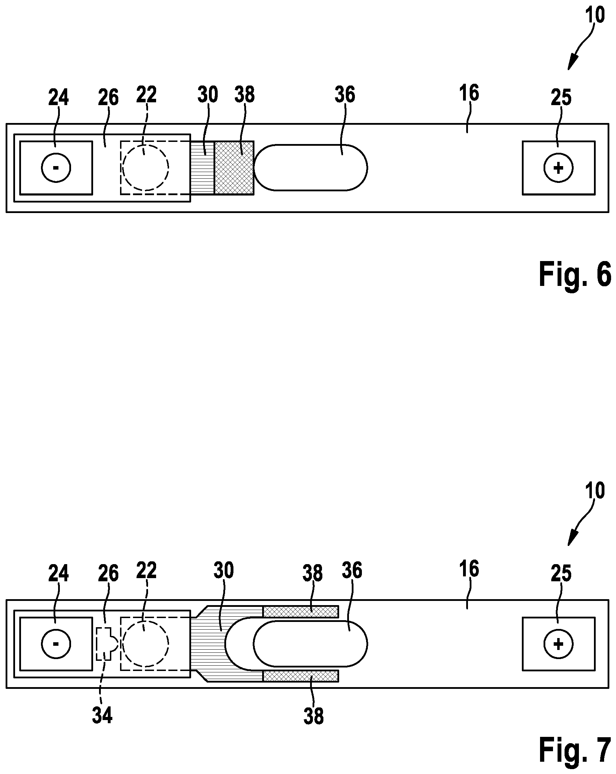

Figur 6 zeigt eine mögliche Form des Leiters 30. Dieser kann als Blechstreifen ausgestaltet sein und ist zwischen einem Berstventil 36 und dem vom Batteriezellengehäuse 16 isolierten Pol 24 angeordnet. Der Leiter 30 ist an einer seiner Seiten mit dem Batteriezellengehäuse 16 in einer Verbindungsstelle 38 verbunden. Die Verbindungsstelle 38 kann zum Beispiel in Form einer Schweißverbindung realisiert sein. Um die erforderlichen Kräfte zur Anhebung des Leiters 30 gering zu halten, ist es zweckmäßig, den Abstand von der Verbindungsstelle 38 zum Mittelpunkt der Membran 22 möglichst groß zu wählen. Dadurch wird von der Membran 22 beim Anheben des Leiters 30 nur ein unwesentlicher Kraftmehraufwand im Vergleich zu Konstruktionen ohne Leiter 30 abverlangt. Deshalb wird die Charakteristik der Membran 22 im Vergleich zum Stand der Technik nur unwesentlich verändert.

Figur 7 zeigt einen Ansatz, um bei Batteriezellengehäusen 16 mit einem Berstventil 36 gemäß dem Stand der Technik einen noch größeren Abstand zwischen der Verbindungsstelle 38 und dem Mittelpunkt der Membran 22 zu schaffen. Der Leiter 30 in Form eines Blechstreifens wird dazu gabelförmig um das Berstventil 36 herumgeführt. Die Verbindungsstellen 38 befinden sich nun nicht mehr zwischen der Membran 22 und dem Berstventil 36, sondern neben dem Berstventil 36. Aufgrund des größeren Abstandes zwischen der Verbindungsstelle 38 zum Mittelpunkt der Membran 22 erfolgt, im Vergleich zu Figur 6, bei ansonst gleichen Parametern eine sicherere Anhebung des Leiters 30 durch die Membran 22. Zudem wird die Auslösecharakteristik der Überladeschutzeinrichtung im Vergleich zum Stand der Technik nur geringfügig verändert.

## Patentansprüche

1. Batteriezelle (10) mit einer Membran (22), welche dazu ausgebildet ist, sich bei einem Druckanstieg innerhalb der Batteriezelle (10) nach außen zu wölben und dadurch eine elektrisch leitfähige Verbindung der beiden Pole (24, 25) herzustellen, wobei der isolierte Pol (24) über eine Auskragung (26) verfügt und_ein Leiter (30) an der Außenseite der Membran (22) angeordnet und derart mit der Batteriezelle (10) verbunden ist, dass durch die sich nach außen wölbende Membran (22) der Leiter (30) von der Membran (22) einseitig angehoben wird und gegen die Auskragung (26) gedrückt wird, so dass die Pole (24, 25) über den Leiter (30) miteinander elektrisch leitfähig verbunden werden, **dadurch gekennzeichnet, dass** zwischen der Membran (22) und dem Leiter (30) ein elektrischer Isolator (32) angeordnet ist, so dass ein möglicher Strom zwischen den beiden Polen (24, 25) den Leiter (30) durchfließen muss.

2. Batteriezelle (10) nach Anspruch 1, wobei eine Vibrationssperre (34) ein mögliches Schwingen des Leiters (30) verhindert.

3. Batteriezelle (10) nach einem der vorhergehenden Ansprüche, wobei der Leiter (30) ein Blechstreifen ist.

4. Batteriezelle (10) nach einem der vorhergehenden Ansprüche, wobei der Leiter (30) mit der Batteriezelle (10) über mindestens eine Schweißstelle verbunden ist.

5. Batteriezelle (10) nach Anspruch 4, wobei der Leiter (30) über mindestens eine Schweißstelle mit dem Batteriezellengehäuse (16) verbunden ist.

6. Batteriezelle (10) nach einem der vorhergehenden Ansprüche, wobei die Batteriezelle (10) eine Lithium-Ionen-Sekundärzelle ist.

7. Batterie (14) umfassend eine Mehrzahl der Batteriezellen (10) nach einem der Ansprüche 1 bis 6.

8. Kraftfahrzeug oder Kraftfahrzeugeinrichtung umfassend die Batterie (14) nach Anspruch 7.

## Claims

1. Battery cell (10) comprising a membrane (22), which is designed to curve outwards in the event of an increase in pressure within the battery cell (10) and thus produce an electrically conductive connection between the two poles (24, 25), wherein the insulated pole (24) has an overhang (26) and a conductor (30) is arranged on the outer side of the membrane (22) and is connected to the battery cell (10) in such a way that, by virtue of the outwardly curving membrane (22), the conductor (30) is lifted off from the membrane (22) on one side and is pressed against the overhang (26), with the result that the poles (24, 25) are electrically conductively connected to one another via the conductor (30), **characterized in that** an electrical insulator (32) is arranged between the membrane (22) and the conductor (30), with the result that a possible current between the two poles (24, 25) must flow through the conductor (30) .

2. Battery cell (10) according to Claim 1, wherein an anti-vibration means (34) prevents possible oscillation of the conductor (30).

3. Battery cell (10) according to one of the preceding claims, wherein the conductor (30) is a sheet-metal strip.

4. Battery cell (10) according to one of the preceding claims, wherein the conductor (30) is connected to the battery cell (10) via at least one welded joint.

5. Battery cell (10) according to Claim 4, wherein the conductor (30) is connected to the battery cell housing (16) via at least one welded joint.

6. Battery cell (10) according to one of the preceding claims, wherein the battery cell (10) is a lithium-ion secondary cell.

7. Battery (14) comprising a plurality of battery cells (10) according to one of Claims 1 to 6.

8. Motor vehicle or motor vehicle device comprising the battery (14) according to Claim 7.

## Revendications

1. Cellule de batterie (10) comprenant une membrane (22) qui est conçue pour se bomber vers l'extérieur lors d'une augmentation de pression à l'intérieur de la cellule de batterie (10) et établir ainsi une liaison électriquement conductrice entre les deux pôles (24, 25), le pôle isolé (24) disposant d'un porte-à-faux (26) et un conducteur (30) étant disposé sur le côté extérieur de la membrane (22) et relié à la cellule de batterie (10) de telle sorte que le conducteur (30) est soulevé unilatéralement de la membrane (22) et poussé contre le porte-à-faux (26) par la membrane (22) qui se bombe vers l'extérieur, de sorte que les pôles (24, 25) sont reliés de manière électriquement conductrice l'un à l'autre par le conducteur (30), **caractérisée en ce qu'**un isolateur électrique (32) est disposé entre la membrane (22) et le conducteur (30), de sorte qu'un courant possible entre les deux pôles (24, 25) doit circuler à travers le conducteur (30).

2. Cellule de batterie (10) selon la revendication 1, un blocage anti-vibrations (34) empêchant une éventuelle oscillation du conducteur (30).

3. Cellule de batterie (10) selon l'une des revendications précédentes, le conducteur (30) étant une bande de tôle.

4. Cellule de batterie (10) selon l'une des revendications précédentes, le conducteur (30) étant relié à la cellule de batterie (10) par le biais d'au moins un point de soudure.

5. Cellule de batterie (10) selon la revendication 4, le conducteur (30) étant relié au boîtier de la cellule de batterie (16) par le biais d'au moins un point de soudure.

6. Cellule de batterie (10) selon l'une des revendications précédentes, la cellule de batterie (10) étant une cellule secondaire aux ions de lithium.

7. Batterie (14) comprenant une pluralité de cellules de batterie (10) selon l'une des revendications 1 à 6.

8. Véhicule automobile ou dispositif pour véhicule automobile comprenant la batterie (14) selon la revendication 7.
